# EUROPEAN PATENT SPECIFICATION

(11) **EP 2 487 982 B1**
(45) Date of publication and mention of the grant of the patent: **01.04.2015**
(21) Application number: 11290079.0
(22) Date of filing: 10.02.2011
(51) Int. Cl.: H04W 72/12, H04W 88/00, H04W 88/08

(54) **Access device and method of operating an access device**
Zugangsvorrichtung und Verfahren zum Betreiben einer Zugangsvorrichtung
Dispositif d'accès et procédé d'exploitation d'un dispositif d'accès

(43) Date of publication of application: 15.08.2012
(73) Proprietor: ALCATEL LUCENT, 92100 Boulogne-Billancourt (FR)
(72) Inventor: Fahldleck, Torsten, 71254 Ditzingen (DE); Aydin, Osman, 70569 Stuttgart (DE); Cesar, Bozo, 70439 Stuttgart (DE)
(74) Representative: Wetzel, Emmanuelle

(56) References cited:
- EP-A1- 2 259 509
- WO-A1-2006/123021
- GAUTAM BHANAGE ET AL: "Virtual Basestation: Architecture for an Open SharedWiMAX Framework", VISA '10 PROCEEDINGS OF THE SECOND ACM SIGCOMM WORKSHOP ON VIRTUALIZED INFRASTRUCTURE SYSTEMS AND ARCHITECTURES; SEPTEMBER 3, 2010; NEW DELHI, INDIA, ASSOCIATION FOR COMPUTER MACHINERY, NEW YORK, NY, USA, [Online] 3 September 2010 (2010-09-03), pages 1-8, XP002621532, DOI: DOI:10.1145/1851399.1851401 ISBN: 978-1-4503-0199-2 Retrieved from the Internet: URL:http://delivery.acm.org/10.1145/186000 0/1851401/p1-bhanage.pdf?key1=1 851401&key2=9666717921&coll=DL&dl=ACM&CFID =9224236&CFTOKEN=79388925> [retrieved on 2011-02-08]
- Ravi Kokku, Rajesh Mahindra, Honghai Zhang, Sampath Rangarajan: "NVS: A Virtualization Substrate for WiMAX Networks", MobiCom'10 Chicago, Illinois, USA, 20 September 2010 (2010-09-20), pages 1-12, XP002637338, Retrieved from the Internet: URL:http://www.nec-labs.com/~rajesh/PAPERS /NVS_mobicom.pdf [retrieved on 2011-05-17]

## Description

### Field of the invention

The invention relates to an access device comprising a physical access interface for establishing access data communications with at least one further device.

The invention further relates to a method of operating an access device.

### Background

Access devices are e.g. used in cellular wireless communications networks to establish data communications between mobile terminals such as mobile phones and a backhaul network. To extend the coverage of wireless communications networks, it has been proposed to increase the number of access devices. However, in many cases, true improvements in wireless coverage may only be achieved if additional access devices are placed in locations that are under the administrative control of private persons or companies, in contrast to public locations or the premises of an operator of the communications network.

Furthermore, cellular network operators tend to share physical access devices which enables to reduce costs related with an operation of the access device and the maintenance thereof.

It is an object of the present invention to provide an improved access device and an improved method of operating an access device which enable a particularly efficient sharing of a physical access device, e.g., by several operators, and which offers a high degree of operational flexibility.

Document GAUTAM BHANAGE ET AL: "virtual Basestation: Architecture for an Open SharedWiMAX Framework", VISA '10 PROCEEDINGS OF THE SECOND ACM SIGCOMM WORKSHOP ON VIRTUALIZED INFRASTRUCTURE SYSTEMS AND ARCHITECTURES; SEPTEMBER 3, 2010; NEW DELHI, INDIA, discloses an architecture for an open shared WiMAX framework and a corresponding performance evaluation.

Document Ravi Kokku, Rajesh Mahindra, Honghai Zhang, Sampath Rangarajan: "NVS: A Virtualization Substrate for WiMAX Networks", MobiCom'10 Chicago, Illinois, USA, 20 September 2010, discloses a virtualization substrate for WiMAX networks.

EP 2 259 509 A1 discloses a method and apparatus for traffic flow differentiation, wherein a plurality of traffic flows are differentiated according to their priority.

WO 2006/123021 A1 discloses a system which comprises one or more wireless networks, as well as a base station for the wireless networks. The base station comprises a virtual base station function, by means of which the base station is arranged to route traffic for wireless networks.

### Summary

Regarding the above mentioned access device, this object is achieved by an access device according to claim 1.

The inventive transfer buffer advantageously enables a particularly efficient data exchange between several virtual access devices, such as virtual base stations, which can be implemented within said access device, and which may e.g. be associated with different operators, and the physical access interface provided by the access device. Thus, a particularly efficient communication between respective virtual base stations, i.e. virtual access devices, and the physical access interface offered by the access device may be accomplished. In effect, several virtual access devices may advantageously share a (single) physical access interface comprised within the access device.

Advantageously, said transfer buffer is configured to receive user data and/or signalling data from at least one virtual access device, and to forward and/or supply said user data and/or signalling data to a physical scheduler associated with said physical access interface. Thus, the physical scheduler, which - in a per se known manner - coordinates the use of resources of said physical access interface, e.g. radio resources such as time, frequency and the like, may efficiently be provided with data that is e.g. to be transmitted in a downlink direction regardless of possible differences in the configurations of the various virtual access devices.

Said transfer buffer is also configured to receive user data and/or signalling data from the physical access interface and to forward and/or supply said user data and/or signalling data to at least one virtual access device.

In other words, generally, according to the embodiments, the transfer buffer advantageously provides an additional abstraction layer between one or more physical access interfaces offered by the access device and one or more virtual access devices which are implemented within the single physical access device. This abstraction layer advantageously enables a particularly efficient data exchange of user data and/or signalling data between a physical scheduler of the physical access interface and "local" schedulers that are comprised within the respective virtual access devices.

As such, both the physical scheduler and the virtual schedulers of the virtual access devices may perform scheduling tasks as known from conventional access devices such as e.g. base stations of cellular communications networks. However, the schedulers according to the embodiments are advantageously configured to employ said transfer buffer as an abstraction layer for a particularly efficient data exchange between each other.

According to a further advantageous embodiment, said virtual access device is configured to define a virtual transfer unit (VTU), which comprises a) data, preferably user data, to be transmitted in a downlink direction via said physical access interface, and b) virtual transfer unit context data (VTUC), which comprises information characterizing a transfer priority of said virtual transfer unit and which is associated with said virtual transfer unit, and to transfer said virtual transfer unit to said transfer buffer. The virtual transfer unit and the related virtual transfer unit context data advantageously offer an efficient abstract data type which enables to encapsulate both user data and signalling data which is required for facilitating an operation of a virtual access device in combination with a physical scheduler of the physical access interface.

Particularly, the virtual transfer unit and the associated virtual transfer unit context data is not required to reflect parameters as currently defined by existing, i.e. standardized, wireless communications network such as GSM, UMTS, LTE, LTE-Advanced or the like. Rather, the virtual transfer units and the associated virtual transfer unit context data represent an abstract data type which encapsulates specific data and signalling information for a common processing via the transfer buffer according to the embodiments. Thus, it is advantageously possible to provide a single physical access device according to the embodiments, which may implement a plurality of virtual access devices, each of which can e.g. be operated independently of the other virtual access devices, e.g. by different operators and/or employing different operational software, while at the same time employing, i.e. sharing, a single common physical access interface of the access device for implementing access data exchange with external units such as terminals. Of course, the number of physical access interfaces at the access device according to the embodiments is not limited to one; i.e. it is also possible to provide a physical access devices comprising more than one physical access interface such as e.g. an antenna interface. However, by employing the principle according to the present embodiments, which rely on the transfer buffer, it is advantageously possible for a plurality of virtual base stations to share a smaller number of physical access interfaces.

According to a further embodiment, a physical scheduler associated with said physical access interface is configured to retrieve data, particularly virtual transfer units according to the embodiments, from said transfer buffer and to transmit said retrieved data or portions thereof via said physical access interface. Thus, the physical scheduler may advantageously fetch its input data from the transfer buffer according to the embodiments which advantageously avoids any extra effort to provide different input interfaces to the physical scheduler , e.g. individually for the various virtual access devices. Rather, the physical scheduler advantageously is configured to operate with the transfer buffer according to the embodiments and thus only requires one interface to said transfer buffer which is advantageously independent of specific communications techniques and/or standards associated with different virtual access devices that are implemented on the access device according to the embodiments.

According to a further embodiment, said physical scheduler is configured to make scheduling decisions depending on at least one of: a scheduling algorithm provided for said physical scheduler, availability of physical resources associated with said physical access interface, and a transfer priority of a virtual transfer unit retrieved from said transfer buffer. As such, the operation of the physical scheduler according to the embodiments resembles an operation of a physical scheduler of conventional access devices such as e.g. base stations of cellular communications networks that do not provide virtualization. However, the physical scheduler according to the embodiments is particularly configured to operate together with the transfer buffer according to the embodiments in order to establish an efficient data exchange with the virtual access interfaces of the virtual base stations independent of a specific communications standard supported by said virtual base stations and/or the physical scheduler.

According to a further embodiment, said physical access interface is configured to receive a transmit request from at least one further device, which indicates that said further device intends to transfer data in an uplink direction to said physical access interface, define a virtual transmit request, which comprises information related to said transmit request, particularly a transmit priority and/or a size value specifying requested data size for said uplink data transfer, and to transfer said virtual transmit request to said transfer buffer. As such, the inventive virtual transmit request represents an abstracted transmit request signalling mechanism, which is independent of the physically received transmit request from the further device, such as e.g. a terminal served by the access device according to the embodiments.

According to a further advantageous embodiment, said virtual access interface is configured to retrieve a virtual transmit request from said transfer buffer, create a virtual grant in response to said virtual transmit request, and to transfer said virtual grant to said transfer buffer. Thus, a virtual access device which comprises said virtual access interface is advantageously enabled to employ the transfer buffer according to the embodiments for providing resource grant notifications, i.e. the virtual grant, which may later on be retrieved by the physical scheduler that also accesses said transfer buffer. From virtual grants so obtained from the transfer buffer, the physical scheduler may generate physical grant notifications, which may be transmitted in a downlink direction to the requesting further device, i.e. terminal, whereby the terminal is notified of a possible resource grants similar to conventional communications systems. However, the inventive abstraction layer enabled by the transfer buffer is advantageously employed which - as already explained above - enables to employ different virtual access devices operating independently of the other virtual access devices, e.g. under control of different operators and/or employing different operational software, together with a single physical access interface and a physical scheduler associated with said physical access interface. The different virtual access devices may advantageously be operated independent of different communications standards at least one of which can be implemented in the physical access interface.

According to further advantageous embodiment, said physical access interface is configured to receive a transmit request from said at least one further device, i.e. a terminal, which indicates that said further device intends to transfer data in an uplink direction to said physical access interface, and transmit a physical grant in response to said transmit requests. Thus, according to the present embodiment, the physical access interface advantageously issues said physical grant to the terminal without first defining a virtual transmit request related to said transmit request. I.e., this embodiment provides a particularly efficient and fast resource grant to the terminal in that it does not require first providing a virtual transmit request to the transfer buffer and waiting for a virtual grant from one of said virtual access devices. Within the present embodiment, the physical access interface rather decides on its own that specific resources may be granted related to one or more virtual access devices, and as a result, the requesting terminal(s) may immediately be notified of this situation thus avoiding any latencies that may be associated with a virtual grant mechanism using the transfer buffer and requiring interaction with a virtual access device.

According to a further advantageous embodiment, said physical access interface is configured to provide at least one virtual access interface with an abstract transfer condition notification, which in particular comprises information on the conditions of data transfer between the physical access interface and the further device. Thus, a virtual access device which comprises said virtual access interface may advantageously be notified of operational parameters which are important for the operation of the virtual access device and its integrated virtual scheduler. Advantageously, according to an embodiment, the abstract transfer condition notifications are not required to be transferred via the transfer buffer, but they may directly be provided from the physical access interface to the respective virtual access device or its virtual access interface, respectively.

However, alternatively, or in addition, employing the transfer buffer for providing such abstract transfer condition notifications is also possible.

According to a further embodiment, said abstract transfer condition notification comprises information on a physical channel employed by said physical access interface for data transfer with said further device and/or on operational parameters of said physical access interface, particularly scheduling constraints. This enables an increased precision in the scheduling of the individual virtual access devices which are implemented by the access device according to the embodiments.

According to further embodiment, said abstract transfer condition notification comprises information on a modulation type and/or coding scheme and/or on further parameters of data transmission between said physical access interface and said external device, which further increases scheduling precision within one or more virtual access devices which are implemented within the access device according to the embodiments.

According to a further advantageous embodiment, at least one virtual access interface uses the information provided by said abstract transfer condition notification to determine physical resources required for data transfer to an external device.

As a further solution to the object of the present invention, a method of operating an access device according to claim 12 is proposed. The method inter alia defines that said access device uses said transfer buffer for exchanging data related to said access data communications between the virtual access interface of said access device and the physical access interface.

Thus, advantageously, an abstraction layer is realized in form of the transfer buffer according to the embodiments, which advantageously enables to operate a multitude of virtual access devices implemented within said access device according to the embodiments, preferably independently of the other virtual access devices. E.g., different virtual access devices may be owned and/or operated by different operators and/or employ different operational software
while relying on a single common physical access interface that is also provided by the access device according to the embodiments. According to a further embodiment, more than one physical access interface (and/or an associated physical scheduler) may also be provided within the access device, wherein e.g. each physical access interface supports at least one specific communications standard and is connected to one or more virtual access devices via the inventive abstraction layer enabled by the transfer buffer.

### Brief description of the figures

Further aspects, features and embodiments of the present invention are given in the following detailed description with reference to the drawings, in which:
- Figure 1: schematically depicts a first embodiment of an access device,
- Figure 2: depicts a simplified block diagram of a virtual access device according to an embodiment,
- Figure 3: depicts a second embodiment of a access device,
- Figure 4: depicts a block diagram illustrating a flow of information in a downlink direction within an access device according to an embodiment,
- Figure 5a, 5b: depict further communication scenarios of information transfer in uplink direction involving resource requests from a terminal and processing thereof within the access device according to the embodiments, and
- Figure 6: depicts a simplified flow chart of a method according to the embodiments.

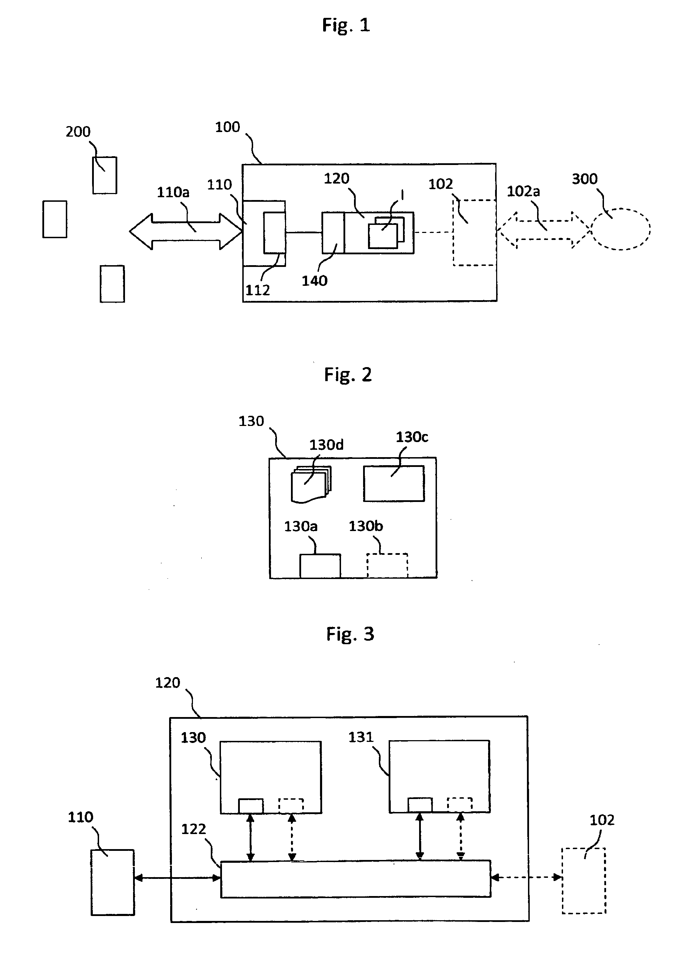

Figure 1 schematically depicts a first embodiment of an access device 100. The access device 100 comprises an access interface 110 for establishing access data communications 110a with at least one further device 200, which may e.g. represent a communications terminal of an end user. According to a preferred embodiment, the access interface 110 is a wireless interface which is configured to operate according to at least one of the communications standards comprising: Global System for Mobile Telecommunications, GSM, Universal Mobile Telecommunications System, UMTS, Long Term Evolution, LTE, IEEE 802.11a/b/g/n, IEEE 802.15, IEEE 802.16.

Correspondingly, the further device 200 may be a wireless terminal supporting one or more of the above listed wireless communications standards.

According to a further embodiment, the access interface 110 may alternatively or additionally be configured for wired data transmission, e.g. forming part of a local area network (LAN) or the like.

In addition to the access interface 110, the access device 100 depicted by Figure 1 may optionally comprise a backhaul interface 102 for establishing backhaul data communications 102a with a backhaul network 300. According to a preferred embodiment, said backhaul interface 102 is configured to operate according to at least one of the communications standards comprising: Asymmetric Digital Subscriber Line (ADSL), Very High Speed Digital Subscriber Line (VDSL). Alternatively or in addition thereto, the backhaul interface 102 may also support wireless data communications with the backhaul network 300.

The operation of the access interface 110 and, if present, of the backhaul interface 102, is controlled by processing means 120 of the access device 100. The processing means may comprise calculation means such as a central processing unit (CPU) or a microprocessor or a digital signal processor (DSP) or the like and supporting peripheral components such as memory means (e.g., random access memory (RAM), read only memory (ROM)), data communication links to the interfaces 110, 102, and further peripheral components known in the art. The processing means 120 may be implemented partly or fully in software running on a conventional processor unit, specialized hardware or any combination thereof. It is also possible to employ field-programmable gate array (FPGA) systems to implement the functionality of the processing means 102.

In contrast to conventional systems, the present embodiment of the access device 100 as depicted by Figure 1 comprises specifically configured processing means 120 which are configured to implement one or more instances I of a virtual access device 130, also cf. Figure 2. Each instance I (Figure 1) of said virtual access device 130 is configured to control at least a portion of said access data communications 110a with said at least one further device 200 and/or said backhaul data communications 102a with said backhaul network 300.

Thus, the processing means 120 according to the present embodiment can advantageously provide the functionality of a plurality of physical access devices although only requiring the hardware equipment 100, 102, 110, 120 of a single "real", e.g. physical, access device 100. According to a preferred embodiment, each instance I of virtual access devices 130 (Figure 2) is configured to provide about the same access device functionality as a conventional physical access device such as a base station of a cellular communications network.

The virtualisation of access devices provided for by the processing means 120 has several advantages:
Each instance I of the virtual access devices 130 may provide access to the backhaul network 300 independently of the operation of other instances I of said virtual access devices 130. E.g., apart from sharing the same physical interfaces 110, 102 and the processing means 120 of the access device 100 according to the present embodiment, the various instances I of the virtual access devices 130 may be considered as separate, autonomous access devices. The virtual access devices 130 may e.g. be used instead of a plurality of real, i.e. physical, conventional access devices in such application scenarios where a strict separation of the operation of the plurality of access devices is desired.

Moreover, the virtual access devices 130 may be dynamically configured by said processing means 120 regarding their operation and resource usage. Thus, it is advantageously possible to grant hardware and/or software resources of the processing means 120 or even interface usage of the interfaces 110, 102 to a specific virtual access device depending on its actual resource requirements, whereby a more efficient operation is realised.

Fig. 2 depicts further details of a virtual access device 130 according to an exemplary embodiment. The virtual access device 130 comprises a virtual access interface 130a that is configured to maintain access communications with a terminal 200 (Fig. 1) as explained in further detail below. Optionally, said virtual access device 130 may also comprise a virtual backhaul interface 130b for supporting a data connection to a backhaul network 300 (Fig. 1).

The reference signs 130c, 130d exemplarily indicate an operating system and applications which may be provided to implement certain specific access device functionalities. As such, the components 130c, 130d may e.g. be configured to implement the typical functions of a base station of a cellular communications system.

According to a further preferred embodiment, the processing means 120 of the access device 100 may comprise hypervisor means 122, Figure 3, which may be configured to initiate and control the instances I of said virtual access device 130. As an example, Figure 3 schematically depicts two instances of virtual access devices 130, 131.

According to a particularly preferred further embodiment, the access device 100 comprises a transfer buffer 140 (Fig. 1) for exchanging data related to said access data communications 110a between the virtual access interface 130a (Fig. 2) of said virtual access device 130 and the physical access interface 110.

The inventive transfer buffer 140 advantageously enables a particularly efficient data exchange between several virtual access devices 130, 131 (Fig. 3), such as virtual base stations, which can be implemented within said access device 100, and which may e.g. be associated with different operators, and the physical access interface 110 as provided by the access device 100.

Optionally, said transfer buffer 140 may also be used for a data exchange between several virtual access devices 130, 131 and the physical backhaul interface 102.

The transfer buffer 140 offers particularly efficient means of communication between respective virtual base stations 130, 131, i.e. virtual access devices, and the physical access interface 110 provided by the access device 100. In effect, several virtual access devices 130, 131 may advantageously share a (single) physical access interface 110 comprised within the access device 100.

The transfer buffer 130 may e.g. be implemented within memory means of said processor means 120, e.g. within a RAM of the processor means 120. However, alternative configurations are also possible.

According to an embodiment, said transfer buffer 140 (Fig. 1) is configured to receive user data and/or signalling data from at least one virtual access device 130, and to forward and/or supply said user data and/or signalling data to a physical scheduler 112 associated with said physical access interface 110. Thus, the physical scheduler 112, which - in a per se known manner - may coordinate the use of resources of said physical access interface 110, e.g. radio resources such as time, frequency and the like, may efficiently be provided with data that is e.g. to be transmitted in a downlink direction to the terminals 200 regardless of possible differences in the configurations of the various virtual access devices 130, 131.

According to a further advantageous embodiment, said transfer buffer 140 is configured to receive user data and/or signalling data from the physical access interface 110 and to forward and/or supply said user data and/or signalling data to at least one virtual access device 130, 131.

In other words, generally, according to the embodiments, the transfer buffer 140 advantageously provides an abstraction layer between one or more physical access interfaces 110 offered by the access device 100 and one or more virtual access devices 130, 131 which are implemented within the single physical access device 100. This abstraction layer advantageously enables a particularly efficient data exchange of user data and/or signalling data between the physical scheduler 112 of the physical access interface 110 and "local", virtual schedulers (not shown) that are comprised within the respective virtual access devices 130, 131.

As such, both the physical scheduler 112 and the virtual schedulers of the virtual access devices 130, 131 may perform scheduling tasks similar to conventional access devices such as e.g. base stations of cellular communications networks. However, the schedulers according to the embodiments are advantageously configured to employ said transfer buffer 140 as an abstraction layer for a particularly efficient data exchange between each other.

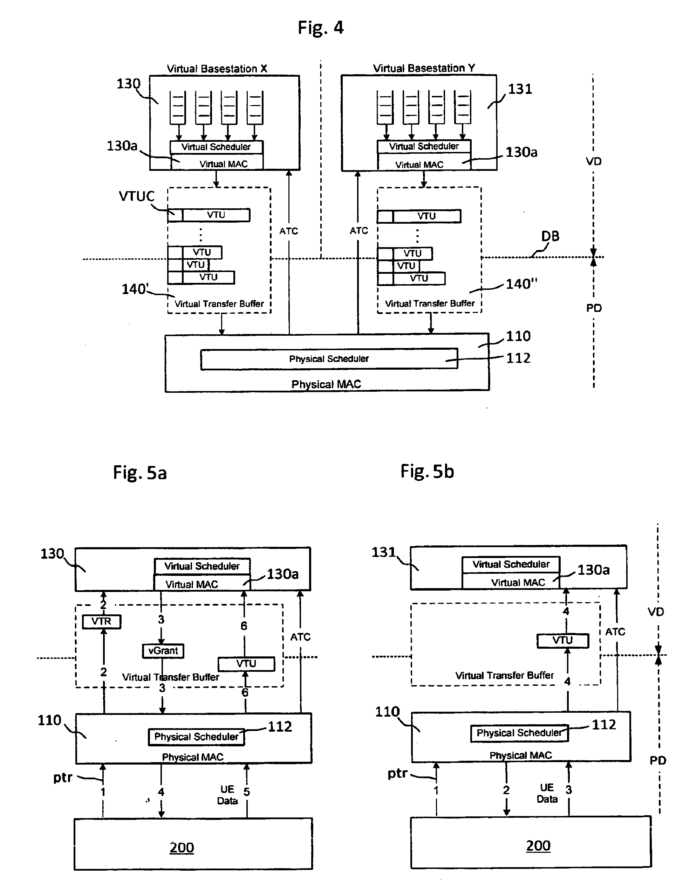

Figure 4 depicts a block diagram illustrating a flow of information in a downlink direction within the access device 100 according to an embodiment. According to this embodiment, said virtual access device 130 is configured to define a virtual transfer unit (VTU), which comprises
a) data, preferably user data, to be transmitted in a downlink direction via said physical access interface 110 to the terminal 200 (Fig. 1), and
b) virtual transfer unit context data (VTUC), which comprises information characterizing a transfer priority of said virtual transfer unit VTU and which is associated with said virtual transfer unit VTU.

Further, after defining said VTU and an associated VTUC, the virtual base station 130 transfers said virtual transfer unit VTU to said transfer buffer 140, which according to the present embodiment is partitioned into several buffer portions 140', 140''.

The virtual transfer unit VTU and the related virtual transfer unit context data VTUC advantageously offer an efficient abstract data type which enables to encapsulate both user data and signalling data which is required for facilitating an operation of a virtual access device 130 in combination with a physical scheduler 112 of the physical access interface 110.

Particularly, the virtual transfer unit VTU and the associated virtual transfer unit context data VTUC is not required to reflect parameters as currently defined by existing, i.e. standardized, wireless communications network such as GSM, UMTS, LTE, LTE-Advanced or the like. Rather, the virtual transfer units and the associated virtual transfer unit context data represent an abstract data type which encapsulates specific data and signalling information for a common processing via the transfer buffer according to the embodiments. Thus, it is advantageously possible to provide a single physical access device according 110 to the embodiments, which may implement a plurality of virtual access devices 130, 131 sharing a single common physical access interface of the access device for implementing access data exchange with external units such as terminals. Of course, the number of physical access interfaces 110 at the access device 100 according to the embodiments is not limited to one; i.e. it is also possible to provide a physical access devices comprising more than one physical access interface such as e.g. an antenna interface. However, by employing the principle according to the present embodiments, which rely on the transfer buffer, it is advantageously possible for a plurality of virtual base stations to share a smaller number of physical access interfaces.

Figure 4 further depicts a second virtual access device 131, which, in analogy to the first virtual access device 130, may also be a virtual base station for a cellular communications network. However, the second virtual access device 131 may e.g. be operated by a different operator as compared to the first device 130.

As can be seen from Fig. 4, a first transfer buffer portion 140' is provided for the exchange of data between the first virtual base station 130 and the physical access interface 110 of the access device 100. Likewise, a second transfer buffer portion 140" is provided for a respective data exchange between the second virtual access device 131 and the physical access interface 110.

According to an embodiment, as already explained above, the first virtual access device 130 is configured to define a virtual transfer unit VTU, which comprises data, preferably user data, to be transmitted in a downlink direction via said physical access interface 110. Moreover, the virtual access device 130 is also configured to provide virtual transfer unit context data VTUC, which is preferably integrated into said virtual transfer unit VTU and which may e.g. be interpreted as a kind of header information related to said virtual transfer unit VTU. Said virtual transfer unit context data VTUC advantageously comprises information characterizing a transfer priority of said virtual transfer unit VTU.

The virtual access device 130 advantageously transfers a created virtual transfer unit VTU to said transfer buffer portion 140', where it is queued, together with further, earlier created virtual transfer units VTU, for retrieval by the physical access interface 110.

Thus, the physical access interface 110 is efficiently supplied with downlink data and related control information from the first virtual access device 130 via the transfer buffer portion 140' in a coordinated manner.

Likewise, the generation and supply of virtual transfer units VTU is accomplished within the second virtual access device 131, via the respective associated transfer buffer portion 140''.

Thus, the physical access interface 110 may also retrieve virtual transfer units VTU generated by the second virtual access device 131 for downlink transmissions to terminals served by the second virtual access device 131 from the respective transfer buffer portion 140".

According to a further embodiment, the transfer buffer portions 140', 140" may be comprised within a single buffer memory, for example in different address ranges of a buffer memory (not shown) maintained by the processing means 120 of the physical access device 100 (Fig. 1).

Generally, the transfer buffer 140 or the related buffer portion 140', 140" may be provided within a memory, e.g. a random access memory, which is implemented within and/or accessible by the processing means 120 (figure 1) of the access device 100 according to the embodiments. Likewise, the transfer buffer 140 should be accessible by the various virtual access devices 130, 131, which may e.g. be controlled by the processing means 120 that also implement the various instances I of the virtual access devices 130, 131.

Figure 4 further depicts a domain boundary DB, which defines a virtual domain VD and a physical domain PD to illustrate the operation of the components 130, 131, 110 according to the embodiments. From this separation into a physical domain PD and a virtual domain VD, it can be seen, that the transfer buffer 140, 140', 140" according to the embodiments represents an abstraction layer which advantageously provides for a data exchange between both domains VD, PD. Thus, an efficient data transmission from a multitude of virtual access devices 130, 131 to a single physical access device 110 is accomplished.

According to a further advantageous embodiment, the physical scheduler 112, which is associated with said physical access interface 110, is configured to retrieve data, particularly said virtual transfer units VTU, from the transfer buffer 140, 140', 140" and to transmit said retrieved data or portions thereof via said physical access interface 110 to the terminals 200.

Preferably, said physical scheduler 112 is also configured to make scheduling decisions depending on at least one of: a scheduling algorithm provided for said physical scheduler 112, availability of physical resources associated with said physical access interface 110 (e.g., time slots and/or frequency subcarriers or frequency bands and the like), and a transfer priority of a virtual transfer unit VTU retrieved from said transfer buffer 140.

According to a further embodiment, said physical access interface 110 is configured to provide at least one virtual access interface or a respective virtual access device 130, 131, with an abstract transfer condition notification ATC, which in particular comprises information on the conditions of data transfer between the physical access interface 110 and the further devices, i.e. terminals 200.

I.e., the abstract transfer condition notification ATC can be regarded as a kind of feedback information which is provided by the physical access interface 110 to the virtual access device 130, 131 in order to notify them on actual transmission and/or scheduling conditions, which enables the virtual access devices 130, 131 to adapt their scheduling algorithms and/or an operation in general to the operational state of the common physical access interface 110.

Advantageously, said abstract transfer condition notification ATC may comprise an information on the modulation type and/or coding scheme and/or on further parameters of data transmission between said physical access interface 110 and said external devices 200.

Further, at least one virtual access interface 130a (Fig. 2) of the virtual access devices 130, 131 uses the information provided by said abstract transfer condition notification ATC to determine physical resources required for data transfer to an external device 200.

Figure 5a depicts a further operational scenario according to the embodiments, wherein the physical access interface 110 receives a transmit request ptr from said at least one further device 200, i.e. terminal served by one of the virtual access devices 130, 131.

Said transmit request ptr, which is a physical transmit request, since it originates from the external device 200 (i.e. terminal), indicates that said terminal 200 intends to transfer data in an uplink direction to said physical access interface 110 or, more precisely, to a respect virtual access device 130, 131 implemented within the access device 100 according to the embodiments. Thus, according to an embodiment, the physical access interface 110 is configured to define a virtual transmit request VTR in response to receiving said transmit request ptr from the terminal 200, wherein the virtual transmit request VTR comprises information related to said transmit request ptr of the terminal 200, particularly its transmit priority and/or a size value specifying a requested data size for said uplink data transfer. Moreover, the physical access device 110 is configured to transfer said virtual transmit request VTR to the transfer buffer portion 140' associated with the respective virtual access device 130 the transmit request ptr from the terminal 200 is directed to.

According to further embodiment, the virtual access interface 130a of the virtual access device 130 is configured to retrieve a virtual transmit request VTR from the transfer buffer, presently from the associated transfer buffer portion 140' (Fig. 5a), to create a virtual grant vGrant in response to said virtual transmit request, and to transmit said virtual grant vGrant to said transfer buffer 140'. Thus, the transfer buffer portion 140' comprises the virtual grant vGrant which indicates that the virtual access device 130 has, in response to receiving the virtual transfer request VTR, granted specific resources which may be employed by the requesting terminal 200 for future uplink data transmissions to the virtual access device 130.

Thus, the physical access device 110 may retrieve such virtual grant vGrant from the transfer buffer 140' and correspondingly transmit a "physical" grant to the requesting terminal 200.

Upon receiving said "physical" grant from the physical access device 110, the terminal 200 is in possession of the related grant information and may in future transmit data to the virtual access device 130 via the physical access interface 110 according to the received grant information. Said uplink data transmission is directed to the virtual access device 110, which, upon receiving the uplink data, generates corresponding virtual transfer units VTU and supplies said virtual transfer units VTU to the transfer buffer portion 140' associated with the target virtual access device 130. Thus, the virtual access device 130 may retrieve the respective uplink virtual transfer units VTU from the transmit buffer portion 140'.

Figure 5b depicts a further operational scenario regarding an uplink data transmission. In contrast to the scenario according to figure 5a, the scenario according to figure 5b provides an accelerated signalling process in that the physical access interface 110, upon receiving a transfer request ptr from the terminal 200, itself generates a grant message pGrant and transmit said grant message pGrant to the terminal 200. I.e., the physical access interface 110 decides on its own whether and how to grant any resources to the terminal 200, particularly without transforming the received physical transfer request ptr from the terminal 200 into a virtual transfer request VTR as depicted by figure 5a. Thus, any latencies related to the exchange of virtual grant signalling VTR, vGrant may be avoided according to the embodiment of figure 5b.

However, upon receiving respective uplink data from the terminal 200, the physical access interface 110 may again transform said uplink data received from the terminal 200 into corresponding virtual transfer units VTU, which are subsequently supplied to the transfer buffer portion 140" thus enabling retrieval of said virtual transfer units VTU by the destination virtual access interface 131.

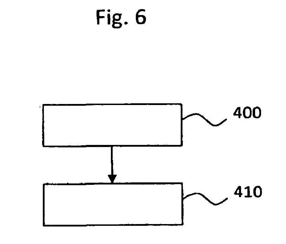

Figure 6 depicts a simplified flow chart of a method according to the embodiments. In a first step 400, a virtual access device 130 (figure 5a), which is implemented within a physical access device 100 (figure 1) according to the embodiments, defines data to be transmitted in a downlink direction to a terminal 200 served by said virtual access device 130, wherein said data may preferably be defined in form of a virtual transfer unit VTU.

In a second step 410 (figure 6), the virtual access device 130 (figure 5a) provides said information to the transfer buffer 140 (figure 1) for retrieval by the physical access interface 110, which is configured to retrieve said data and to forward said data to the respective terminal 200 served by the virtual access device 130.

According to a further embodiment, a virtual access device 130, 131 comprises a virtual scheduler. E.g., an operator of a virtual base station 130, 131 may implement any virtual scheduler like round robin, proportional fair queuing or other according to his demands. The virtual scheduler is responsible for assigning an appropriate priority identifier to the virtual transfer units VTU forwarded to the transfer buffer 140. The specific scheduling mechanisms within a virtual base station 130, 131 may e.g. be defined in analogy to existing scheduling mechanisms of conventional base station and are - as such - not detailed any further in the present specification.

In contrast to a virtual scheduler, as may be implemented within a virtual access device 130, 131, the physical scheduler 112 (Fig. 1), according to an embodiment, schedules the VTUs retrieved from the transfer buffer 140, 140', 140'' according to e.g. priority identifiers contained therein or in an associate VTUC and/or the physical channel conditions and/or spectrum sharing agreements between operators of different virtual base stations 130, 131 and the like.

According to a further embodiment, a virtual transfer unit VTU as defined by a virtual access device 130, 131 may be characterized as follows: the virtual transfer unit VTU comprises data belonging to one data flow plus an associated VTU context (VTUC). Preferably, the VTU is generated by a scheduler of a virtual base station 130, 131.

According to further advantageous embodiments, one or more of the following information elements and aspects may be implemented within a VTU and/or an associated VTUC:
- Size (preferably set by a virtual access interface 130a): defines the size of the VTU in Byte
- Flow Context (preferably set by a virtual access interface 130a): defines the context of the flow (e.g. connection ID, and the like)
- Priority identifier (preferably set by a virtual access interface 130a): defines the priority of the VTU [-X, ..., Y] (preferably, the values X and Y are static configured per physical access device 100; a value of "0" is the default priority) among the VTUs within one virtual base station 130. Preferably, the physical scheduler 112 is configured to transfer the VTU with the highest priority number first via the physical interface 110. A virtual scheduler of a virtual base station 130 may change the priority number on demand. The range of the priority number may be configured during system start up according to the radio technology, but should be unique among the virtual base stations 130, 131 within one physical base station 100. According to the particular traffic contracts between the operators of different virtual base stations 130, 131, the priority ranges between operators (i.e., virtual base stations 130, 131 operated by different operators) may be different. E.g., one operator may have higher priority to access physical resources.
- Transfer Pointer (preferably set by a virtual access interface 130a): 0 <= Transfer Pointer <= Size; defines which amount of data was successful delivered.
- VTUs inserted by a virtual access interface 130a contain a transfer pointer of 0, a transfer pointer = 100 means that 100 bytes of the VRU were successful scheduled by the physical scheduler 112, a transfer pointer = size means that the complete VTU was successful scheduled by the physical scheduler 112.
- Status (may preferably be set by either physical scheduler 112 and/or scheduler of virtual access device 130): The status field contains an actual transmit state of the VTU. It may be initiated by a virtual scheduler and may be updated by the physical scheduler 112, preferably after each physical scheduling period.
- Init (newly placed VTU in the transfer buffer 140 by a virtual access device 130, 131)
- Delivery in progress
- Successfully delivered (indicates that VTU-related data (i.e., VTU and/or associated VTUC) can be removed from the transfer buffer 140, preferably by a virtual scheduler)
- Unsuccessfully delivered
- TTL (preferably set by a virtual access interface 130a):
   The TTL (time to live) field defines the maximum time in which the VTU has to be successfully delivered. E.g., when a VTU which belongs to a voice over IP data flow, could not be successfully delivered by the physical access interface 110 within the give time to live, the VTU context is marked as "unsuccessfully delivered"; and the corresponding VTU and/or VTUC is removed.
- Abstract transfer condition ATC notification information; it is preferably defined on a per-terminal basis. ATC may e.g. be announced by the physical domain PD, e.g. the physical scheduler 112 or generally the physical access interface 110, to a virtual base station 130, 131 to inform the respective virtual scheduler(s) about the transfer conditions. According to an embodiment, the physical domain PD generates an ATC depending on the physical channel conditions and optionally from the scheduling constraints of the physical scheduler 112. The ATC shall preferably include a mathematical dependency from the modulation and coding scheme employed within the physical access interface 110. With this information, a virtual base station 130 is able to compute physical resources needed for a data transfer. This computed radio resource consumption can be used by a virtual scheduler to adjust its scheduling decisions according to the actual physical channel conditions.
- If the physical access interface 110 determines that a specific virtual base station 130 consumes more physical resources than specified in its traffic contract, according to an embodiment, the physical access interface 110 can adjust the ATC, e.g. reducing the ATC values for said specific virtual base station 130 or its virtual scheduler, respectively, to reduce data allocation. An example of a basic definition of the ATC (abstract transfer condition) may e.g. read: ATC = [1, ... ,128]. An ATC value of 10 is e.g. set if QPSK ½ is used on physical layer, whereas an ATC value of 60 is e.g. set if QAM64 ¾ is used on physical layer.
- Downlink Data transfer across virtual domain VD and physical domain PD: As already explained above, a virtual access interface 130a generates a VTU and fills VTU with data according to its resource management (virtual scheduler) and places it in the transfer buffer 140. In addition, a virtual scheduler associated with said virtual access interface 130a may generate an associated VTU context VTUC and may fill the context with the required control data. A status field of the VTUC is preferably set to "init". Then, according to an embodiment, the physical scheduler 112 processes the VTU according to the priority identifiers, the physical channel conditions and the business contracts between the operators of the various virtual base stations 130, 131 supported by the access device 100. When the data of a VTU is fully delivered, the scheduler 112 of the physical domain PD sets the transfer pointer to the size value of the respective VTU to signal an associated virtual access interface 130a, that its data (VTU) is completely and successfully delivered. If the PD scheduler 112 had delivered the data partially, the transfer pointer of the VTU context is adapted accordingly. This signals the virtual scheduler a possible congestion on the physical domain PD, and the virtual scheduler may adapt its scheduling.
- At the physical access interface 110, the data to be transmitted may e.g. be dealt with in the form of physical resource blocks, PRB(s), which are transferred via an air interface of the access interface 110. If a VTU is transmitted partially, the remaining VTU content is transmitted in further PRB(s) in the next scheduling period/s of the physical scheduler 112.
- After successful delivery of VTU data to the terminal 200, which may e.g. be acknowledged by a per se known HARQ (hybrid automatic repeat request) ACK (acknowledge) mechanism, the physical access interface 110 marks the VTU as "successful delivered state" in the status field of the VTU context VTUC. The interface 110 removes the VTU plus its associated VTU context VTUC from the transfer buffer 140.
- According to an embodiment, for an efficient scheduling in the virtual domain VD, a virtual scheduler needs feedback from the physical domain PD regarding the physical channel conditions and load situations. One type of feedback according to an embodiment is the ATC, which gives the virtual scheduler abstract (i.e., preferably independent of specific mobile communications techniques) information about the channel conditions between the access device 100 and particular user terminals 200. With the ATC value, the virtual scheduler can estimate the physical resource consumption for a particular flow and can adapt its scheduling accordingly. A further type of feedback from the PD to the VD is provided in form of the VTU transfer state. By reading the transfer state and measuring the time between the VTU init and VTU successful/unsuccessful delivery states, a virtual access interface 130a can estimate a load condition on the air interface of the physical access interface 110.

According to a further embodiment, when a user terminal 200 intends to transfer a data portion of a particular data flow in uplink direction via the air interface provided by said physical access interface 110, it first sends a transmit request ptr (Fig. 5a) to the access device 100. The transmit request ptr is received by the physical access interface 110 of the access device 100. Based on this transmit request ptr, the physical scheduler 112 generates a virtual transfer request VTR and places it in the transfer buffer 140, 140', 140''. Preferably, the virtual transfer request VTR contains among other information elements, a priority field which defines the transmit priority and a size field which specifies the requested data size. According to an embodiment, the value range of the transmit priority is defined during a system start up. The value of the priority field is e.g. defined by the physical access interface 110. E.g., in case of an LTE- compatible transmission, the priority field may represent an abstraction of the buffer status report (BSR) of the LTE capable user terminal 200. The physical access interface 110 processes the received VTR according to its information elements. Virtual transfer requests VTRs with a higher priority are processed first. According to the request size field, the priority field and optionally an abstract transfer condition (ATC), a virtual access interface 130a of a virtual base station 130, 131 can decide how much data it will grant to transmit in response to the request VTR. The virtual scheduler may e.g. decide if it grants the full requested size or only a smaller size and the remaining part in a later grant. The virtual access interface 130a generates a virtual grant vGrant and places it in the respective virtual transfer buffer 140', 140''. The virtual grant vGrant is read by the physical access interface 110 which generates an appropriate "physical" transmit grant and sends it via the air interface to the user terminal 200. The detailed specification of the "physical" transmit grant is given by the particular radio technology employed for communication with the terminal 200, which is not part of this invention. The transmit grant is received by the user terminal 200, the user terminal 200 sends the data portion via the air interface and the data is received by the physical access interface 110 of the access device 100. The physical access interface 110 then builds a virtual transfer unit VTU and places it in the transmit buffer 140, 140', 140''. Finally the virtual access interface 130a of the virtual base station 130 reads the VTU.

According to a further embodiment, for an optimized support of GBR (guaranteed bit rate) services, an alternative uplink bandwidth request mode is defined, cf. Fig. 5b. In the "accelerated uplink bandwidth request mode", the uplink process is, preferably completely, handled by the physical access interface 110, where the uplink bandwidth request procedure is completely processed inside the physical scheduler 112. After that, the physical access interface 110 places a virtual transfer unit VTU in the transmit buffer 140, 140', 140'', then the virtual access interface 130a reads the VTU for further processing.

Depending on the specific physical request mechanisms (PRM), e.g. in LTE requests through PRACH or PUCCH, the physical access interface 110 decides for a normal (Fig. 5a) or accelerated (Fig. 5b) uplink bandwidth request mode.

According to further embodiments, the following features and aspects may also be implemented within the access device 100:
- Definition and usage of VTU (Virtual Transfer Unit): VTU contains data belonging to one data flow plus an associated VTU context VTUC. In the uplink direction, a virtual transfer unit VTU is preferably generated by the physical access interface 110.
- VTU context VTUC may contain a user terminal id (e.g. C-RNTI in LTE).
- Further definition of information elements and usage of virtual transfer request VTR:
- Requested size: defines the size in bytes which is requested by the user terminal 200;
- Priority: defines the priority of the virtual transfer request VTR [-X, ..., Y] (the values X and Y are preferably static configured per physical base station 100; "0" is the default priority) among the VTUs within one virtual base station 130, 131. E.g., in case of LTE, the priority field represents an abstraction of the buffer status report (BSR) of the user terminal 200.
- User terminal id: defines the user terminal identity, e.g. C-RNTI in LTE
- Definition of information elements and usage of virtual grant vGrant:
- Granted size (set by virtual access interface 130a):
   defines the size in bytes which is granted to the user terminal 200; i.e.: 0 <= granted size <= requested size
- Reference (set by virtual access interface 130a):
   defines a reference which refers to the belonging virtual transmit request VTR
- Priority (set by virtual access interface 130a):
   defines the priority of the VGrant

The abstraction offered by the inventive transfer buffer 140 and the associated data types VTU, VTUC, VTR, vGrant combined with a simplification of the radio interface makes the virtualization of a base station 100 applicable.

Furthermore, the abstraction decouples the virtual base stations 130, 131 from a particular radio technology that is offered by the physical access interface 110. This reduces the design and implementation effort during system evolution. For a technology upgrade, e.g. LTE to LTE-Advanced, only the hardware and partly the software which belongs to the physical domain PD, have to be changed. The software within the virtual base station 130, 131 may advantageously remain unchanged.

Operator-specific scheduler types implemented within the virtual base stations 130, 131 can remain as they are, as they get enough feedback from the physical scheduler 112 like the information in the VTR "Virtual Transfer Request" to tune the operator specific scheduler.

Several operators can advantageously share one physical device 100, but every operator operates his own virtual device 130, 131. An operator can implement and manage his own services and features as he owns and runs his specific virtual base station 130, 131. The radio resource abstraction, as seen from the virtual base stations 130, 131, gives the operator nearly the same flexibility as with a private physical base station.

Any functionality related to the virtual access devices 130, 131, their components 130a, .. and to any other device comprised within the access device 100 according to the embodiments, such as e.g. the transfer buffer 140 and the virtual scheduler 112, may at least partially be implemented on or with support of the processing means 120 and/or respective software and/or additional hardware. Particularly, the transfer buffer 140, 140', 140'' may be implemented in a memory accessible by the processing means, and its operation may e.g. be controlled by a virtual machine monitor or a hypervisor, which may also be provided for controlling the several instances I of virtual access devices 130, 131.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. The scope of the invention is exclusively defined by the appended independent claims.

## Claims

1. Access device (100) comprising a physical access interface (110) for establishing access data communications (110a) with at least one further device (200), processing means (120) configured to implement at least one instance (I) of a virtual access device (130) which comprises at least one virtual access interface (130a), and a transfer buffer (140) for exchanging data related to said access data communications (110a) between the virtual access interface (130a) of said virtual access device (130) and the physical access interface (110),
wherein said transfer buffer (140) is configured to receive user data and/or signaling data from at least one virtual access device (130), and to forward and/or supply said user data and/or signaling data to a physical scheduler (112) associated with said physical access interface (110), and wherein
said transfer buffer (140) is configured to receive user data and/or signaling data from the physical access interface (110) and to forward and/or supply said user data and/or signaling data to at least one virtual access device (130).

2. Access device (100) according to
claim 1, wherein said virtual access device (130) is configured to
- define a virtual transfer unit (VTU), which comprises a) data to be transmitted in a downlink direction via said physical access interface (110), and b) virtual transfer unit context data (VTUC), which comprises information characterizing a transfer priority of said virtual transfer unit (VTU) and which is associated with said virtual transfer unit (VTU), and to
- transfer said virtual transfer unit (VTU) to said transfer buffer (140).

3. Access device (100) according to claim 2, wherein a physical scheduler (112) associated with said physical access interface (110) is configured to retrieve data, from said transfer buffer (140) and to transmit said retrieved data or portions thereof via said physical access interface (110).

4. Access device (100) according to claim 3, wherein said physical scheduler (112) is configured to make scheduling decisions depending on at least one of: a scheduling algorithm provided for said physical scheduler (112), availability of physical resources associated with said physical access interface (110), and a transfer priority of a virtual transfer unit (VTU) retrieved from said transfer buffer (140).

5. Access device (100) according to one of the preceding claims, wherein said physical access interface (110) is configured to
- receive a transmit request (ptr), from said at least one further device (200), which indicates that said further device (200) intends to transfer data in an uplink direction to said physical access interface (110),
- define a virtual transmit request (VTR), which comprises information related to said transmit request ptr
and to
- transfer said virtual transmit request (VTR) to said transfer buffer (140).

6. Access device (100) according to claim 5, wherein said virtual access interface (130a) is configured to
- retrieve a virtual transmit request (VTR) from said transfer buffer (140),
- create a virtual grant (vGrant) in response to said virtual transmit request, and to
- transfer said virtual grant (vGrant) to said transfer buffer (140).

7. Access device (100) according to one of the preceding claims, wherein said physical access interface (110) is configured to
- receive a transmit request (ptr), from said at least one further device (200), which indicates that said further device (200) intends to transfer data in an uplink direction to said physical access interface (110), and
- transmit a physical grant (pGrant) in response to said transmit request,
- wherein said physical grant (pGrant) is issued without first defining a virtual transmit request (VTR) related to said transmit request (ptr).

8. Access device (100) according to one of the preceding claims, wherein said physical access interface (110) is configured to provide at least one virtual access interface (130a) with an abstract transfer condition notification (ATC), which comprises information on the conditions of data transfer between the physical access interface (110) and a further device (200).

9. Access device (100) according to claim 8, wherein said abstract transfer condition notification (ATC) comprises abstract information which does not comprise specific physical values of a specific communications technology but rather abstract data which is independent of a specific communications technology, on a physical channel employed by said physical access interface (110) for data transfer with said further device (200) and/or on operational parameters of said physical access interface (110).

10. Access device (100) according to one of the claims 8 to 9, wherein said abstract transfer condition notification (ATC) comprises abstract information which does not comprise specific physical values of a specific communications technology but rather abstract data which is independent of a specific communications technology, on a modulation type and/or coding scheme and/or on further parameters of data transmission between said physical access interface (110) and said external device (200).

11. Access device (100) according to claim 10, wherein at least one virtual access interface (130a) uses the information provided by said abstract transfer condition notification (ATC) to determine physical resources required for a data transfer to an external device (200).

12. Method of operating an access device (100) comprising a physical access interface (110) for establishing access data communications (110a) with at least one further device (200), processing means (120) configured to implement at least one instance (I) of a virtual access device (130) which comprises at least one virtual access interface (130a), and a transfer buffer (140), wherein said access device (100) uses said transfer buffer (140) for exchanging data related to said access data communications (110a) between the virtual access interface (130a) of said virtual access device (130) and the physical access interface (110), wherein said transfer buffer (140) receives user data and/or signaling data from at least one virtual access device (130), and forwards and/or supplies said user data and/or signaling data to a physical scheduler (112) associated with said physical access interface (110) and wherein said transfer buffer (140) receives user data and/or signaling data from the physical access interface (110) and forwards and/or supplies said user data and/or signaling data to at least one virtual access device (130).

## Patentansprüche

1. Zugangsvorrichtung (100), umfassend eine physische Zugangsschnittstelle (110) zum Herstellen von Zugangsdatenkommunikationen (110a) mit mindestens einer weiteren Vorrichtung (200), Verarbeitungsmittel (120), welche dafür konfiguriert sind, mindestens eine Instanz (I) einer virtuellen Zugangsvorrichtung (130), die mindestens eine virtuelle Zugangsschnittstelle (130a) umfasst, zu implementieren, und einen Übertragungspufferspeicher (140) für den Austausch von auf die besagten Zugangsdatenkommunikationen (110a) bezogenen Daten zwischen der virtuellen Zugangsschnittstelle (130a) der besagten virtuellen Zugangsvorrichtung (130) und der physischen Zugangsschnittstelle (110),
wobei der besagte Übertragungspufferspeicher (140) dafür konfiguriert ist, Benutzerdaten und/oder Signalisierungsdaten von mindestens einer virtuellen Zugangsvorrichtung (130) zu empfangen und die besagten Benutzerdaten und/oder Signalisierungsdaten an einen mit der besagten physischen Zugangsschnittstelle (110) assoziierten physischen Ablaufplaner (112) weiterzuleiten und/oder bereitzustellen,
und wobei der besagte Übertragungspufferspeicher (140) dafür konfiguriert ist, Benutzerdaten und/oder Signalisierungsdaten von der physischen Zugangsschnittstelle (110) zu empfangen und die besagten Benutzerdaten und/oder Signalisierungsdaten an mindestens eine virtuelle Zugangsvorrichtung (130) weiterzuleiten und/oder bereitzustellen.

2. Zugangsvorrichtung (100) nach Anspruch 1, wobei die besagte virtuelle Zugangsvorrichtung (130) für Folgendes konfiguriert ist:
- Definieren einer virtuellen Übertragungseinheit (VTU), welche umfasst: a) in einer Abwärtsrichtung über die besagte physische Zugangsschnittstelle (110) zu übertragende Daten, und b) Kontextdaten der virtuellen Übertragungseinheit (VTUC), welche Informationen, die eine Übertragungspriorität der besagten virtuellen Übertragungseinheit (VTU) kennzeichnen und welche mit der besagten virtuellen Übertragungseinheit (VTU) assoziiert sind, umfassen, und
- Übertragen der besagten virtuellen Übertragungseinheit (VTU) an den besagten Übertragungspufferspeicher (140).

3. Zugangsvorrichtung (100) nach Anspruch 2, wobei ein mit der besagten physischen Zugangsschnittstelle (110) assoziierter physischer Ablaufplaner (112) dafür konfiguriert ist, Daten aus dem besagten Übertragungspufferspeicher (140) abzurufen und die besagten abgerufenen Daten oder Teile davon über die besagte physische Zugangsschnittstelle (110) zu übertragen.

4. Zugangsvorrichtung (100) nach Anspruch 3, wobei der besagte physische Ablaufplaner (112) dafür konfiguriert ist, Ablaufplanungsentscheidungen in Abhängigkeit von mindestens entweder einem für den besagten physischen Ablaufplaner (112) bereitgestellten Ablaufplanungsalgorithmus, der Verfügbarkeit von mit der besagten physischen Zugangsschnittstelle (110) assoziierten physischen Ressourcen, oder einer Übertragungspriorität einer aus dem besagten Übertragungspufferspeicher (140) abgerufenen virtuellen Übertragungseinheit (VTU) zu treffen.

5. Zugangsvorrichtung (100) nach einem der vorstehenden Ansprüche, wobei die besagte physische Zugangsschnittstelle (110) für Folgendes konfiguriert ist:
- Empfangen einer Übertragungsanforderung (ptr) von der besagten mindestens einen weiteren Vorrichtung (200), welche anzeigt, dass die besagte weitere Vorrichtung (200) beabsichtigt, Daten in einer Aufwärtsrichtung an die besagte physische Zugangsschnittstelle (110) zu übertragen,
- Definieren einer virtuellen Übertragungsanforderung (VTR), welche auf die besagte Übertragungsanforderung (ptr) bezogene Informationen enthält, und
- Übertragen der besagten virtuellen Übertragungsanforderung (VTR) an den besagten Übertragungspufferspeicher (140).

6. Zugangsvorrichtung (100) nach Anspruch 5, wobei die besagte virtuelle Zugangsschnittstelle (130a) für Folgendes konfiguriert ist
- Abrufen einer virtuellen Übertragungsanforderung (VTR) aus dem besagten Übertragungspufferspeicher (140),
- Erstellen einer virtuellen Gewährung (vGrant) in Reaktion auf die besagte virtuelle Übertragungsanforderung, und
- Übertragen der besagten virtuellen Gewährung (vGrant) an den besagten Übertragungspufferspeicher (140).

7. Zugangsvorrichtung (100) nach einem der vorstehenden Ansprüche, wobei die besagte physische Zugangsschnittstelle (110) für Folgendes konfiguriert ist:
- Empfangen einer Übertragungsanforderung (ptr) von der besagten mindestens einen weiteren Vorrichtung (200), welche anzeigt, dass die besagte weitere Vorrichtung (200) beabsichtigt, Daten in einer Aufwärtsrichtung an die besagte physische Zugangsschnittstelle (110) zu übertragen, und
- Übertragen einer physischen Gewährung (pGrant) in Reaktion auf die besagte Übertragungsanforderung,
- wobei die besagte physische Gewährung (pGrant) vor dem Definieren einer auf die besagte Übertragungsanforderung (ptr) bezogenen virtuellen Übertragungsanforderung (VTR) ausgegeben wird.

8. Zugangsvorrichtung (100) nach einem der vorstehenden Ansprüche, wobei die besagte physische Zugangsschnittstelle (110) für die Bereitstellung mindestens einer virtuellen Zugangsschnittstelle (130a) mit einer Benachrichtigung über abstrakte Übertragungsbedingungen (ATC), welche Informationen über die Bedingungen der Datenübertragung zwischen der physischen Zugangsschnittstelle (110) und einer weiteren Vorrichtung (200) enthält, konfiguriert ist.

9. Zugangsvorrichtung (100) nach Anspruch 8, wobei die besagte Benachrichtigung über abstrakte Übertragungsbedingungen (ATC) abstrakte Informationen enthält, welche keine spezifischen physischen Werte einer spezifischen Kommunikationstechnologie, sondern stattdessen abstrakte Daten, welche von einer spezifischen Kommunikationstechnologie unabhängig sind, umfassen, über einen von der besagten physischen Zugangsschnittstelle (110) für die Datenübertragung mit der besagten weiteren Vorrichtung (200) und/oder über Betriebsparameter der besagten physischen Zugangsschnittstelle (110) verwendeten physischen Kanal.

10. Zugangsvorrichtung (100) nach einem der Ansprüche 8 bis 9, wobei die besagte Benachrichtigung über abstrakte Übertragungsbedingungen (ATC) abstrakte Informationen enthält, welche keine spezifischen physischen Werte einer spezifischen Kommunikationstechnologie, sondern stattdessen abstrakte Daten, welche von einer spezifischen Kommunikationstechnologie unabhängig sind, umfassen, über einen von der besagten physischen Zugangsschnittstelle (110) für die Datenübertragung mit der besagten weiteren Vorrichtung (200) und/oder über Betriebsparameter der besagten physischen Zugangsschnittstelle (110) verwendeten physischen Kanal.

11. Zugangsvorrichtung (100) nach Anspruch 10, wobei zumindest eine virtuelle Zugangsschnittstelle (130a) von der besagten Benachrichtigung über abstrakte Übertragungsbedingungen (ATC) bereitgestellte Informationen verwendet, um für eine Datenübertragung an eine externe Vorrichtung (200) erforderliche physische Ressourcen zu ermitteln.

12. Verfahren zum Betreiben einer Zugangsvorrichtung (100), welche eine physische Zugangsschnittstelle (110) zur Herstellung von Zugangsdatenkommunikationen (110a) mit mindestens einer weiteren Vorrichtung (200), Verarbeitungsmittel (120), welche dafür konfiguriert sind, mindestens eine Instanz (I) einer virtuellen Zugangsvorrichtung (130), die mindestens eine virtuelle Zugangsschnittstelle (130a) umfasst, zu implementieren, und einen Übertragungspufferspeicher (140) umfasst, wobei die besagte Zugangsvorrichtung (100) den besagten Übertragungspufferspeicher (140) für den Austausch von auf die besagten Zugangsdatenkommunikationen (110a) bezogenen Daten zwischen der virtuellen Zugangsschnittstelle (130a) der besagten virtuellen Zugangsvorrichtung (130) und der physischen Zugangsschnittstelle (110) verwendet, wobei der besagte Übertragungspufferspeicher (140) Benutzerdaten und/oder Signalisierungsdaten von mindestens einer virtuellen Zugangsvorrichtung (130) empfängt und die besagten Benutzerdaten und/oder Signalisierungsdaten an einen mit der besagten physischen Zugangsschnittstelle (110) assoziierten physischen Ablaufplaner (112) weiterleitet und/oder bereitstellt, und wobei der besagte Übertragungspufferspeicher (140) Benutzerdaten und/oder Signalisierungsdaten von der physischen Zugangsschnittstelle (110) empfängt und die besagten Benutzerdaten und/oder Signalisierungsdaten an mindestens eine virtuelle Zugangsvorrichtung (130) weiterleitet und/oder bereitstellt.

## Revendications

1. Dispositif d'accès (100) comprenant une interface d'accès physique (110) pour établir des communications de données d'accès (110a) avec au moins un dispositif supplémentaire (200), des moyens de traitement (120) configurés pour mettre en oeuvre au moins une instance (I) d'un dispositif d'accès virtuel (130) qui comprend au moins une interface d'accès virtuel (130a), et un tampon de transfert (140) pour échanger des données relatives auxdites communications de données d'accès (110a) entre l'interface d'accès virtuel (130a) dudit dispositif d'accès virtuel (130) et l'interface d'accès physique (110), dans lequel ledit tampon de transfert (140) est configuré pour recevoir des données utilisateur et/ou des données de signalisation provenant d'au moins un dispositif d'accès virtuel (130) et pour acheminer lesdites données utilisateur et/ou données de signalisation vers un dispositif de planification physique (112) associé à ladite interface d'accès physique (110) et/ou pour les fournir à celui-ci, et dans lequel ledit tampon de transfert (140) est configuré pour recevoir des données utilisateur et/ou des données de signalisation provenant de l'interface d'accès physique (110) et pour acheminer lesdites données utilisateur et/ou données de signalisation vers au moins un dispositif d'accès virtuel (130) et/ou pour les fournir à celui-ci.

2. Dispositif d'accès (100) selon la revendication 1 dans lequel ledit dispositif d'accès virtuel (130) est configuré pour
- définir une unité de transfert virtuel (VTU), qui comprend a) des données à transmettre dans une direction de liaison descendante par l'intermédiaire de ladite interface d'accès physique (110), et b) des données de contexte d'unité de transfert virtuel (VTUC), qui comprennent des informations caractérisant une priorité de transfert de ladite unité de transfert virtuel (VTU) et qui sont associées à ladite unité de transfert virtuel (VTU), et pour
- transférer ladite unité de transfert virtuel (VTU) vers ledit tampon de transfert (140).

3. Dispositif d'accès (100) selon la revendication 2, dans lequel un dispositif de planification physique (112) associé à ladite interface d'accès physique (110) est configuré pour récupérer des données à partir dudit tampon de transfert (140) et pour transmettre lesdites données récupérées ou parties de celles-ci par l'intermédiaire de ladite interface d'accès physique (110).

4. Dispositif d'accès (100) selon la revendication 3, dans lequel ledit dispositif de planification physique (112) est configuré pour prendre des décisions de planification en fonction d'au moins un des éléments suivants : un algorithme de planification prévu pour ledit dispositif de planification physique (112), la disponibilité de ressources physiques associées à ladite interface d'accès physique (110) et une priorité de transfert d'une unité de transfert virtuel (VTU) récupérée à partir dudit tampon de transfert (140).

5. Dispositif d'accès (100) selon l'une des revendications précédentes, dans lequel ladite interface d'accès physique (110) est configurée pour
- recevoir une demande de transmission (ptr), à partir dudit au moins un dispositif supplémentaire (200), qui indique que ledit dispositif supplémentaire (200) est destiné à transférer des données dans une direction de liaison montante vers ladite interface d'accès physique (110),
- définir une demande de transmission virtuelle (VTR), qui comprend des informations relatives à ladite demande de transmission ptr, et pour
- transférer ladite demande de transmission virtuelle (VTR) vers ledit tampon de transfert (140).

6. Dispositif d'accès (100) selon la revendication 5, dans lequel ladite interface d'accès virtuel (130a) est configurée pour
- récupérer une demande de transmission virtuelle (VTR) à partir dudit tampon de transfert (140),
- créer une autorisation virtuelle (vGrant) en réponse à ladite demande de transmission virtuelle, et pour
- transférer ladite autorisation virtuelle (vGrant) vers ledit tampon de transfert (140).

7. Dispositif d'accès (100) selon l'une des revendications précédentes, dans lequel ladite interface d'accès physique (110) est configurée pour
- recevoir une demande de transmission (ptr), à partir dudit au moins un dispositif supplémentaire (200), qui indique que ledit dispositif supplémentaire (200) est destiné à transférer des données dans une direction de liaison montante vers ladite interface d'accès physique (110), et
- transmettre une autorisation physique (pGrant) en réponse à ladite demande de transmission,
- dans lequel ladite autorisation physique (pGrant) est émise sans définir au préalable une demande de transmission virtuelle (VTR) relative à ladite demande de transmission (ptr).

8. Dispositif d'accès (100) selon l'une des revendications précédentes, dans lequel ladite interface d'accès physique (110) est configurée pour fournir au moins une interface d'accès virtuel (130a) avec une notification de condition de transfert abstrait (ATC), qui comprend des informations sur les conditions de transfert de données entre l'interface d'accès physique (110) et un dispositif supplémentaire (200).

9. Dispositif d'accès (100) selon la revendication 8, dans lequel ladite notification de condition de transfert abstrait (ATC) comprend des informations abstraites qui ne comprennent pas de valeurs physiques spécifiques d'une technologie de communication spécifique mais plutôt des données abstraites qui sont indépendantes d'une technologie de communication spécifique, sur un canal physique utilisé par ladite interface d'accès physique (110) pour le transfert de données avec ledit dispositif supplémentaire (200) et/ou sur des paramètres de fonctionnement de ladite interface d'accès physique (110).

10. Dispositif d'accès (100) selon l'une des revendications 8 et 9, dans lequel ladite notification de condition de transfert abstrait (ATC) comprend des informations abstraites qui ne comprennent pas de valeurs physiques spécifiques d'une technologie de communication spécifique mais plutôt des données abstraites qui sont indépendantes d'une technologie de communication spécifique, sur un type de modulation et/ou un schéma de codage et/ou sur des paramètres supplémentaires de transmission de données entre ladite interface d'accès physique (110) et ledit dispositif externe (200).

11. Dispositif d'accès (100) selon la revendication 10, dans lequel au moins une interface d'accès virtuel (130a) utilise les informations fournies par ladite notification de condition de transfert abstrait (ATC) afin de déterminer des ressources physiques requises pour un transfert de données vers un dispositif externe (200).

12. Procédé de fonctionnement d'un dispositif d'accès (100) comprenant une interface d'accès physique (110) pour établir des communications de données d'accès (110a) avec au moins un dispositif supplémentaire (200), des moyens de traitement (120) configurés pour mettre en oeuvre au moins une instance (I) d'un dispositif d'accès virtuel (130) qui comprend au moins une interface d'accès virtuel (130a), et un tampon de transfert (140), dans lequel ledit dispositif d'accès (100) utilise ledit tampon de transfert (140) pour échanger des données relatives auxdites communications de données d'accès (110a) entre l'interface d'accès virtuel (130a) dudit dispositif d'accès virtuel (130) et l'interface d'accès physique (110), dans lequel ledit tampon de transfert (140) reçoit des données utilisateur et/ou des données de signalisation provenant d'au moins un dispositif d'accès virtuel (130), et achemine lesdites données utilisateur et/ou données de signalisation vers un dispositif de planification physique (112) associé à ladite interface d'accès physique (110) et/ou les fournit à celui-ci, et dans lequel ledit tampon de transfert (140) reçoit des données utilisateur et/ou des données de signalisation provenant de l'interface d'accès physique (110) et achemine lesdites données utilisateur et/ou données de signalisation vers au moins un dispositif d'accès virtuel (130) et/ou les fournit à celui-ci.
